# EUROPEAN PATENT SPECIFICATION

(11) **EP 3 696 579 B1**
(45) Date of publication and mention of the grant of the patent: **07.06.2023**
(21) Application number: 20155570.3
(22) Date of filing: 05.02.2020
(51) Int. Cl.: F21V 5/04, F21V 13/12, F21V 14/00, F21W 131/406, F21Y 115/10, G02B 5/02, F21S 10/00, G02B 19/00

(54) **A METHOD OF PROJECTING LIGHT RADIATION AND CORRESPONDING DEVICE**
VERFAHREN ZUR PROJEKTION VON LICHTSTRAHLUNG UND ENTSPRECHENDE VORRICHTUNG
PROCÉDÉ DE PROJECTION D'UN RAYONNEMENT LUMINEUX ET DISPOSITIF CORRESPONDANT

(30) Priority: 13.02.2019 IT 201900002071
(43) Date of publication of application: 19.08.2020
(73) Proprietor: CLAY PAKY S.p.A., 24068 Seriate (BG) (IT)
(72) Inventor: ANGELINI, Mr. Marco, I-27020 Trivolzio (Pavia) (IT); FRISON, Mr. Renato, I-33083 Chions (Pordenone) (IT); ALFIER, Mr. Alberto, I-31050 Vedelago (Treviso) (IT)
(74) Representative: Bosotti, Luciano

(56) References cited:
- EP-A1- 1 293 722
- US-B1- 6 206 544

## Description

### Technical Field

The present description relates to lighting techniques.

One or more embodiments may find application e.g. in the field of show and entertainment.

### Technological Background

The technology of entertainment lighting frequently resorts to projectors of the kind known as Moving Head Projector and to devices known as Profilers, which are adapted to project white and coloured light beams and optionally images with different beam angles.

Such devices may employ electrically powered light sources such as e.g. halogen or discharge lamps.

More recently, other types of electrically powered light radiation sources have been increasingly used, such as High Luminous Efficacy and/or High Luminance LEDs. However, in some instances such sources are unable to reach the luminance values of the traditional light radiation sources.

The use of LED sources is not limited to retrofitting traditional sources, but involves the implementation of dedicated light engines, which are especially designed for such applications and which are provided with dedicated projection optics.

In this scenario, it is desirable to obtain an accurate adaptation and an accurate correspondence to the desired lighting and image quality characteristics for applications such as entertainment lighting.

In this respect, solutions have been proposed wherein the light radiation of a LED source (e.g. a multicoloured LED or a Chip-on-Board (CoB) generator) is initially collimated by a collimator lens group, it is subsequently mixed via a lenslet array (of the type commonly known as "Fly's Eye") which operates according to Koehler's principle, and finally it is projected onto the gobo plane by means of a condenser lens, which is adapted to project the infinity overlapped virtual Fly's Eye stops.

It is moreover recalled that the name "gobo" refers to (usually disc-shaped) metal or glass elements, which are used to project images, texts, figures of various kinds by practically operating as "slides" adapted to withstand the high temperatures which may develop in projectors such as those used in shows.

A solution which is similar to the above-mentioned solution has been proposed for example by the company Appotronics: according to this approach, a single multicoloured LED is replaced by a matrix of LEDs of a single colour or plural colours, each of which has a respective collimator lens associated therewith: it will be appreciated that, in principle, the lighting system is the same as previously described.

Such previously described solutions may provide a good uniformity as regards colour and illuminance distribution on the gobo plane. In such solutions, the gobo plane may constitute in turn the target plane for a projection optics arranged immediately downstream of the gobo, adapted to project a (magnified) image of the gobo itself at a certain distance onto a projection surface (e.g. a stage wall or background).

It has been observed that, by acting on the position of such optical systems with respect to the gobo aperture, it is possible to vary the power of the projection optics, and accordingly to change the light beam aperture angle (e.g. at the level FWHM, an acronym for Full Width at Half Maximum) so as to project images of the gobo having different magnification ratios.

Considering the uniform distribution of illuminance and colour created on the gobo plane by the optical system of the light engine, the final illuminance distribution on the projection plane should theoretically be uniform, and the colours should be mixed as desired.

However, the projection system is not perfect, and may exhibit defects relating to residual chromatic aberration, for example as regards lateral colour aberration.

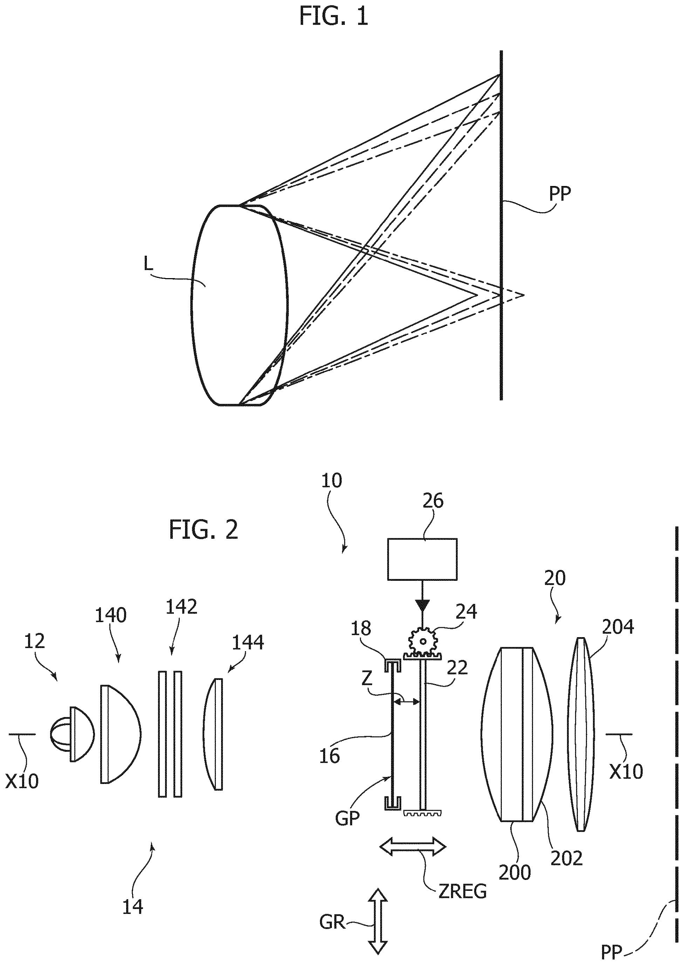

As schematically shown in Figure 1, with reference to a lens L used to project light radiation onto a projection plane PP, chromatic aberration is an optical defect due to the dispersion properties of the lens material (e.g. glass). A "real" lens is therefore unable to focus different colours into a single convergence point in the image plane (projection plane PP) .

This takes place because the refractive index of the material of a lens L depends on (i.e. varies with the variation of) the wavelength of the impinging light radiation.

Chromatic aberration appears as a series of coloured "fringes" along the boundaries of the image portions which separate the dark and the bright parts, as a result of the fact that the various colours cannot be focused precisely in the same conditions.

As schematically shown in Figure 1, chromatic aberration may appear either as a longitudinal or as a lateral aberration.

The bottom part of Figure 1 exemplifies the fact that, due to longitudinal aberration, light rays of different wavelengths (schematically shown as straight lines, dashed lines and chain lines) are not focused exactly at the same distance from lens L.

In the central part of Figure 1, a condition is assumed by way of example wherein the wavelength corresponding to the rays shown in dashed lines is exactly focused on the surface of the projection plane PP. On the other hand, the light radiation of different wavelengths (as shown in solid lines and in dash-and-dot lines) is focused slightly before (for example, for wavelengths at the blue end of the spectrum) and respectively slightly after (for example, for wavelengths at the red end of the spectrum) the projection plane PP.

Conversely, the top part in Figure 1 exemplifies the possible effects of lateral chromatic aberration: the light radiation with different wavelengths (again shown in solid lines, dashed lines and dash-and-dot lines) is focused in adjoining but not exactly corresponding positions on the surface of plane PP.

The phenomenon of chromatic aberration comprises a combination of longitudinal and lateral aberration.

In the previous systems, it has been proposed to compensate chromatic aberration to a certain extent by acting on the features of the optical systems.

However, we were able to ascertain that a satisfactory correction of chromatic aberration may be achieved (only) when the image projected onto the projection plane PP is conjugated with the gobo aperture.

On the other hand, there are situations (e.g. when a particularly soft illumination is desired, e.g. in order to achieve specific scenic effects) wherein the gobo projection is required to be out of focus, leading to consequent phenomena of residual longitudinal and chromatic aberration.

In this case, for example, colours may no longer be evenly mixed, so that in the proximity of the boundaries of a gobo image having a textured frame the presence may be noticed of a rainbow-like halo.

In order to contrast this phenomenon at least partially, it has been proposed to position a diffuser at the exit of the lighting device, between the gobo plane and the first lens of the projection optics.

This solution partially alleviates lateral colour aberration on the projected image, but it has the drawback of further blurring the profile of the projected image. Such a solution is therefore adapted to be employed in order to project images having rather sharp contours and coarse details (e.g. polygons such as rectangles, obtained by modifying the gobo aperture via blades).

On the contrary, when projecting images with more complex patterns (e.g. texts with small characters or detailed pictures) the result is unsatisfactory because the details of the image are lost, and the image undesirably acquires a blurred aspect.

More specifically, the invention relates to a method according to the preamble of claim 1, which is known, e.g., from US 6 206 544 B1. Also EP 1 293 722 is of some interest for the invention.

### Object and Summary

One or more embodiments aim at overcoming the drawbacks outlined in the foregoing.

According to one or more embodiments, said object may be achieved thanks to a method having the features set forth in the claim 1 that follows.

One or more embodiments may refer to a corresponding lighting device as per claim 4.

The claims are an integral part of the technical teachings provided herein with reference to embodiments.

### Brief Description of the Figures

One or more embodiments will now be described, by way of non-limiting example only, with reference to the annexed Figures, wherein:
- Figure 1 has already been described with reference to the phenomenon of chromatic aberration,
- Figure 2 is a side elevation view of a device according to embodiments,
- Figure 3 is a perspective view of the device of Figure 2,
- Figures 4A and 4B and Figures 5A and 5B exemplify possible interventions on the projection plane in embodiments.

It will be appreciated that, for clarity and simplicity of illustration, the various Figures may not be drawn to the same scale.

It will also be appreciated that, for ease of representation in the Figures, the projection surface (plane) has been represented as located in the proximity of the lighting device, while actually said surface may be located at a certain distance from the device.

### Detailed Description

In the following description, various specific details are given to provide a thorough understanding of exemplary embodiments according to the specification. The various embodiments may be implemented without one or several specific details, or with other methods, components, materials, etc. In other instances, well-known structures, materials or operations are not shown or described in detail in order to avoid obscuring the various aspects of the embodiments.

Reference throughout this specification to "one embodiment" or "an embodiment" means that a particular feature, structure or characteristic described in connection with the embodiment is included in at least one embodiment. Thus, the possible appearances of the phrases "in one embodiment" or "in an embodiment" in various places throughout this specification are not necessarily all referring exactly to the same embodiment. Furthermore, particular features, structures, or characteristics may be combined in any suitable manner in one or more embodiments.

The headings/references provided herein are given for convenience only, and therefore do not interpret the extent of protection or scope of the embodiments.

In Figure 2, reference 10 generally denotes a device adapted to be used for projecting light radiation. In one or more embodiments, such a device is adapted to be employed in entertainment applications, e.g. in solutions commonly known as Moving Head Projector or Profiler.

According to the present invention, device 10 includes a light radiation source 12.

The latter may be an electrically powered light radiation source of the kind previously mentioned in the introduction of the present description (e.g. a halogen or discharge lamp or a LED light radiation generator), with a first optical system 14 associated thereto.

As exemplified herein, the optical system 14 may comprise, in a combination known in itself:
- a collimator optical assembly 140 (including e.g. a pair of lenses),
- one or more Fly's Eye lenslet arrays operating according to the Koehler principle 142, and
- a condenser lens 144.

Such an optical system is adapted to project the light radiation coming from source 12 onto a gobo plane GP, where a gobo 16 may be located.

As stated in the foregoing, the term "gobo" identifies (usually disc-shaped) elements of metal or glass material, which are adapted to project images, texts, figures of various kinds by practically working as slides adapted to withstand the high temperatures which may develop in the projectors employed in shows or entertainment events.

According to criteria known in themselves, gobo 16 may be an element which is distinct from device 10, because it is located in a holder, e.g. at a bore currently denoted as "gate".

The gobe is therefore adapted to be selectively removed from device 10 itself, in order to be replaced according to the application and usage needs. In other words, depending on the projection features one wishes to obtain on the plane PP, it is possible to replace a given gobo with another gobo having different features, which may be selected from a wide range of different elements, e.g. depending on the image to be projected or on the contour of the gobo aperture, etc.

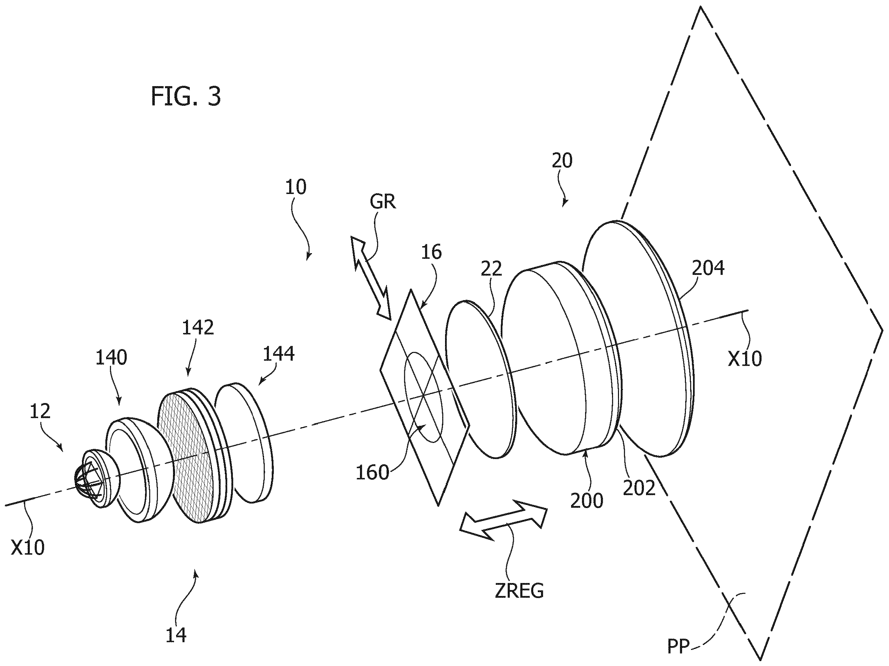

For this reason, gobo 16 may be inserted, e.g. slidingly (see the double arrow GR in Figure 3), into a holder 18 which is adapted to hold the currently employed gobo 16 in the plane GP.

Reference 20 generally denotes a (second) optical system, which is adapted to project towards plane PP (e.g. with a magnifying effect) the light radiation projected onto the plane of gobo GP by the first optical system 14.

In one or more embodiments, optical system 20 may include, according to a solution known in itself, a so-called achromatic doublet comprising a pair of lenses 200, 202, e.g. of a selected combination of Crown and Flint glass, and a singlet 204.

For simplicity of illustration, in the following we will assume that gobo 16 has a circular aperture 160 which is located generally centrally to gobo 16 itself, i.e. which has a circular shape which is centred along a main axis X10 along which light radiation propagation takes place and which goes from source 12 through the first optical system 14 towards the second optical system 20.

Reference 22 denotes a (e.g. planar) diffuser adapted to be coupled to gobo 16, due to the location of diffuser 22 at the gobo plane GP.

By using the preposition "at" we mean to highlight that diffuser 22 may be virtually located in the gobo plane GP or in the proximity thereof, at a distance Z from plane GP.

As schematically shown in Figure 2, in one or more embodiments it may be envisaged to make distance Z adjustable, e.g. by having, associated to diffuser 22, an actuating mechanism (e.g. through levers or optionally through actuation by a motor 24, which may be controlled by a control device 26 according to criteria known in themselves) so as to be able to displace diffuser 22 towards or away from the gobo plane GB (and therefore with respect to gobo 16, which is located in this plane).

In this way (as also shown by the double arrow ZREG in Figure 3) it is possible to modify the diffusive power of diffuser 22 by changing the position of diffuser 22 (distance Z) with respect to the gobo plane GP.

As an alternative, it is also possible to vary said diffusive power not by moving diffuser 22 with respect to gobo plane GP, but by using diffusers 22 having different diffusive properties, which are given e.g. by different surface roughness and/or by the characteristics of a diffusive material included in the body of diffuser 22. In this case, it is possible to envisage a fixed mounting position of diffuser 22, while having the possibility of selectively replacing the diffuser 22 itself, in a similar way as previously mentioned with reference to gobo 16.

In one or more embodiments, diffuser 22 may include a glass material (e.g. frosted glass) and/or a plastic material.

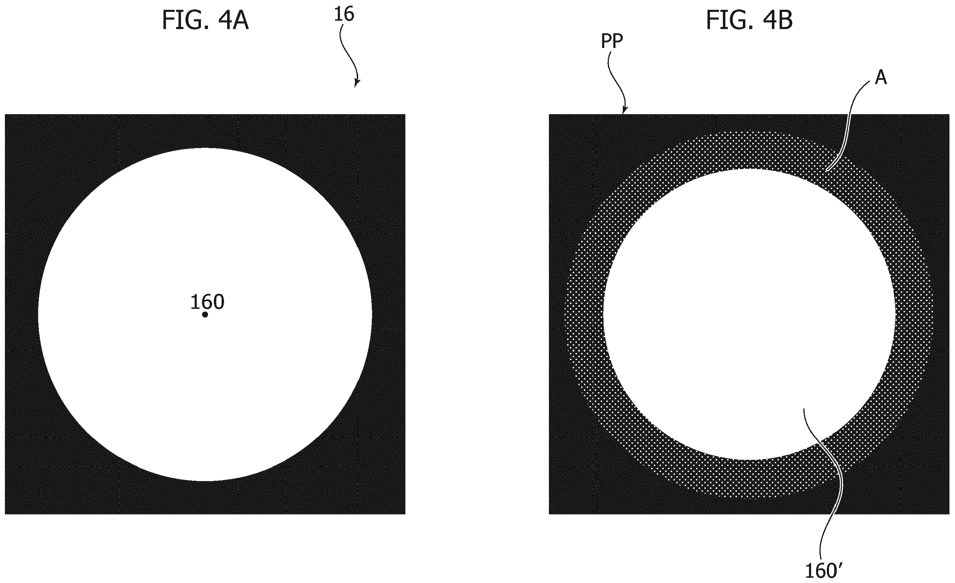

In order to illustrate possible operation features of embodiments, we will initially refer to Figures 4A and 4B.

Figure 4A is a schematic representation of a projection of a gobo 16 having a circular shape (with an aperture 160) onto projection surface PP. For simplicity of illustration (and of course without limiting the embodiments), it may be assumed that aperture 160 is a circular aperture, on which light radiation having a certain colour impinges.

For example (this is of course a merely explanatory example), source 12 (which is assumed to be a multicoloured source, e.g. a LED source) may activate only the light radiation generators operating in the red and in the green colour spectrum. Such a function may be implemented, for example, in LED light radiation generators of the CoB or multicoloured type.

In these conditions, it may be assumed that aperture 160 of gobo 16 is completely filled by a yellow light beam, so as to originate, on the projection plane PP, a corresponding image which may be seen as a (e.g. yellow) disc on a dark background, i.e. as a virtually perfect (and optionally magnified) reproduction of aperture 160 of gobo 16.

This (non-limiting) example refers to a colour synthesis of the additive type. The activation of light radiation generators operating in the red and green spectra recreates a yellow light radiation, while a subtractive synthesis may envisage activating a white light source, which will be filtered by a filter which only transmits the yellow component.

The light illuminating the wall (projection surface PP) from the projection optics 20 is (wholly and only) the light collected withing region 160. The light radiation coming from the illumination system and directed towards the external area of region 160 on the gobo plane may be considered as a radiation which practically impinges on a metal sheet comprising the gate, and which therefore is not destined to be "projected" towards surface PP. Therefore, it is reasonable to assume that, in the absence of other light sources, the only illuminated area on the wall is the region of the gobo traversed by light (in this case yellow light), while the remaining part remains dark, and therefore is represented as black in the Figure.

In such a situation, it is possible to act e.g. on the projection optics 20, in such a way as to correct both the lateral and the longitudinal/axial chromatic aberration.

As previously stated in the introduction to the present description, in certain application and usage conditions it is desirable to "smooth" the image projected onto plane PP, e.g. by modifying the position of one or more lenses in the output optical system 20.

As schematically shown in Figure 4B, if diffuser 22 is absent, in such conditions it will be possible to observe, on the image of the gobo aperture projected onto surface PP (projection plane), in addition to a smoothed image, also the presence of a halo A (e.g. a green halo, with reference to the previously mentioned colours) which undesirably surrounds the image of the gobo aperture denoted as 160'.

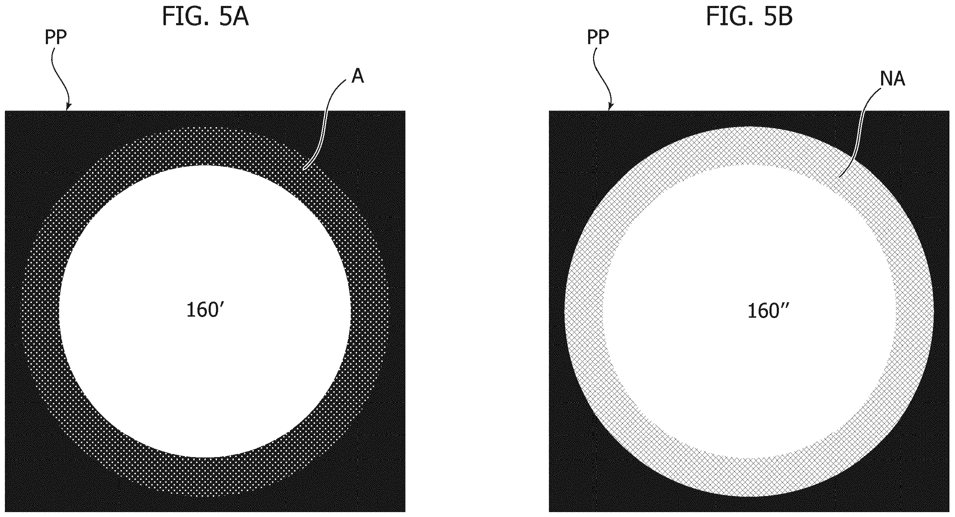

The effect of diffuser 20 may be exemplified (despite the difficulties of a representation in a drawing) by comparing Figure 5A (corresponding to Figure 4B) to Figure 5B, which represents, by keeping all the other conditions, the image 160" of the aperture of gobo 16 projected onto plane PP when diffuser 22 is present.

In the presence of diffuser 22, halo A (which may have e.g. a green colour) of Figures 4B and 5A is replaced, in Figure 5B, by an image 160" of aperture 160 which on one hand is smoothed (or defocused, as desired) and on the other hand exhibits a transition band on the boundary of image 160", denoted as NA, which is substantially devoid of undesired colours (e.g. a green halo contouring a yellow image).

As already mentioned in the foregoing, it is possible to modify the diffusive power of diffuser 22:
- by varying the characteristics of the diffuser itself (e.g. surface roughness and/or density of the diffusing particles embedded therein: e.g. they may be diffusing particles dispersed in a matrix of a transparent material, e.g. plastic or glass material), and/or
- by adjusting the distance Z between the gobo plane GP and diffuser 22.

For example, it is possible to employ differently graduated diffusers 22, located at a (fixed) distance of 10 mm in front of the aperture of gobo 16, having a diffusive power varying from zero (non-diffusive behaviour) to a more pronounced diffusivity, e.g. according to a diffusivity scale with increasing values.

Starting from the condition wherein halo A is clearly perceivable, in the presence of a completely transparent diffuser 22, i.e. a diffuser having a zero diffusive power (and which actually is no diffuser at all), a gradual reduction of halo A may be achieved by using diffusers 22 having a gradually increasing diffusive power.

Similar results may be achieved by modifying the distance Z separating diffuser 22 from the gobo plane GP.

For example, the initial condition may have the diffuser 22 practically contacting the gobo aperture (Z = 0), so that the suppression of halo A is minimal, and then the distance Z may be increased by successive steps of 2 mm, e.g. with Z = 2 mm, Z = 4 mm, Z = 6 mm.

In this way we may observe that, as the distance Z increases, the diffusive power exerted by diffuser 22 gradually rises, therefore correspondingly enhancing the effect of suppressing halo A.

In one or more embodiment, the provision of a diffuser 22 at the gobo plane GP helps in reducing the colour-over-angle artefacts. In this regard, it will be appreciated that a diffuser located in said position (both in the case of a multicoloured light source and in the case of a white or monochromatic light radiation source) enables controlling the degree of image softness.

One or more embodiments enable achieving such a result in a more accurate and controlled fashion than with the possible use of a diffuser located at the exit of the projection system (i.e. downstream of lens 204 with reference to the representation in Figures 2 and 3) .

Even in the absence of chromatic aberration, the insertion of displaceable or graded diffusers 22 in the proximity of the gobo plane GP is convenient and useful compared to the solutions envisaging an external diffuser.

At least in principle, a diffuser 22 as exemplified herein may originate a slight efficiency drop. Nevertheless, said drop is acceptable, considering the gained advantage of controlling the image smoothness level.

Moreover, it will be appreciated that, by placing the diffuser at gobo plane GP, any structural feature of the component will be projected, and therefore visible, onto the projection surface PP. One or more embodiments may therefore envisage the presence of diffusers 22 without uniform features, but with structured features (e.g. diffusers with ring-like lenticular structures or hexagonal/rectangular structures or geometries of various other types) which will be imaged on the projection plane PP. These structured features will be better in focus with a diffuser located in the proximity of the gobo plane GP, and will become increasingly out of focus as the distance of diffuser 22 from the gobo plane GO increases.

This effect is not to be deemed negative in itself: as a matter of fact, it enables the generation of particular illumination effect which the final uses may desire.

As regards the overall size, which depend on the size of device 10, one or more embodiments may take into account the distance which may be envisaged between the gobo plane GP and the output projection optical system (e.g. lens 200 of system 20). For example, this distance may range from 0 mm (ideal case) and approximately 100 mm.

This distance may also depend on the desired illumination beam angle: indeed, the closer the lens to the gobo plane GP, the narrower the beam angle.

In the solutions wherein distance Z may be varied, said distance which the diffuser 22 may span is correspondingly reduced for narrower beam angles. Moreover, it will be appreciated that this range of motion may depend on the focal length of the projection optical system, because a projection optical zoom 20, which in this case includes a couple of lenses (i.e. an achromatic doublet and a singlet) in an arrangement having a longer focal length, i.e. wherein the lenses are farther away from each other, the achromatic doublet being closer to the gobo plane and the singlet being more distant, may offer a smaller range of motion to diffuser 22.

Moreover, it will be appreciated that the presently considered diffusive effects for one or more embodiments do not particularly affect the light radiation source 12.

For example, assuming to place diffuser 22 between the gobo plane GP and the output optical system 20 (however, it will be appreciated that such a location is not in itself mandatory), the light radiation source 12 may comprise a sparse array (e.g. of the kind used in the light radiation sources produced by Appotronic, as mentioned in the introduction to the present description) or a CoB light radiation generator (available on the market) adapted to supply a uniform illumination on the gobo plane GP.

The sources may generate either white light or multicoloured light radiation, the effect of the diffuser 22 being largely independent from the choice of the single light radiation sources (e.g. LEDs, mini-LEDs with a side length ranging from 70 mm to 200mm, micro-LEDs with a side length ranging from 5 mm to 50/70 mm, lasers, etc.).

One or more embodiments enable a remarkable reduction of both axial and lateral colour aberrations when out-of-focus images must be projected, while allowing a fine and controlled tuning of the projected

In one or more embodiments, a diffuser 22 (which may also include a set of a number of single diffusers) which is placed - and therefore basically hidden - inside the projection optics 20 enables the use for the diffuser 22 of a glass material (e.g. glass sheets satinized on one or both sides) or of a plastic material (e.g. polycarbonate or polymethylacrilate) having a satinized surface on one or both surfaces, or else with diffusing particles evenly or unevenly distributed in the material.

In one or more embodiments, the diffuser 22 may comprise transparent silicone having diffusive properties which are obtained for example by embedding diffusing particles of Al₂O₃, SiO₂, TiO₂, or similar materials.

In one or more embodiments, the concentration of such particles may be varied depending on the thickness of the diffuser, or by modifying the distribution or the type of the diffusing particles or the characteristics of the matrix.

For example, it is possible to resort to a mixture of HRI/LRI silicone, i.e. a mixture wherein a small amount (e.g. 0,5-5%) of silicone having a high refractive index (HRI-silicone) is mixed with silicone having a low refractive index (LRI-silicone), so as to obtain a turbid medium having diffusive characteristics.

One or more embodiments may be used with a set of diffusers 22 having different diffusive power, which may be placed alternatively in the proximity of the gobo plane GP.

In one or more embodiments, diffuser 22 (e.g. a plurality of single diffuser elements having respective diffusive power) may comprise a coloured material and/or exhibit the properties of a colour filter, enabling a selective passage of some wavelengths of the impinging light radiation and blocking the passage of others.

In one or more embodiments, diffuser 22 (e.g. a plurality of single diffuser elements having different diffusive powers) may be located in the proximity of the gobo plane GB in a condition wherein diffuser 22 is at least partially tilted with respect to the plane itself (i.e. with respect to axis X10), so as to obtain an increasing or decreasing variation of the image smoothness from one region (e.g. top) as compared to another region (e.g. bottom) of the image projected onto plane PP.

For example (describing a possible implementation by way of example only), let us assume a projection of a gobo aperture 16 having a circular shape, in such a way that the portion of the diffuser which is closer to the gobo plane GB has a lower diffusive power than the rest, so that, in the image projected onto plane PP, the corresponding portion of the border of aperture 160 is projected more sharply than the component on the opposite side of the gobo (being farther away from the diffuser 22).

It is thus possible to obtain a gradually changing diffusive effect, making the border of the profile (e.g. the circle in Figure 5B) projected onto plane PP smoother and smoother until a nearly complete disappearance. In this way it is possible e.g. to reproduce an image evoking the sun at sunset, or the sun above the clouds or above the sea, or an image in the fog.

In one or more embodiments, a similar effect may be obtained by using a diffuser 22 which is not kept tilted, but exhibits graded diffusive properties (e.g. a flat diffuser in which the diffusive power gradually increases from one side to the other).

In one or more embodiments, it is moreover possible to insert, into device 10, diffusers 22 which have different diffusive power, or to use a single diffuser which is made displaceable along the optical axis X10, so as to tailor the diffusive power as a function of the application and usage needs.

This shifting action along the optical axis (motors 24, 26 in Figure 2) may be implemented in a controlled fashion (e.g. for calibrated distance values, which may be stored e.g. into a LUT in the respective control device 26), thereby obtaining a better reproducibility of the desired effect in one device 10 at different times, or in a plurality of different devices 10 which are adapted to operate simultaneously with a mutual coordination.

In one or more embodiments, said regulation of distance Z may be accomplished manually according to traditional solutions, e.g. by envisaging the possibility of displaceable diffuser 22 along a graduated scale, in a similar way as a camera lens.

A motorized solution, as exemplified in Figure 2, may offer the advantage of being automated, e.g. via stepper motors or the like, the possibility being given of implementing a remote control.

As exemplified herein, a method of projecting light radiation onto a projection surface (e.g. PP) comprises:
- generating (see e.g. source 12) light radiation, and uniformly projecting (e.g. via the first optical system 14) the generated light radiation onto a gobo (e.g. 16) in a gobo plane (e.g. GP),
- projecting (e.g. via the second optical system 20), towards the projection surface (PP), light radiation projected onto the gobo (16) in the gobo plane (GP),
the method being adapted to comprise coupling to the gobo a light diffuser (e.g. 22 - a single diffuser or a plurality of diffuser elements) to provide diffusion of light radiation at the gobo (e.g. in the plane GP or in the proximity thereof).

A method as exemplified herein envisages arranging the light diffuser downstream of the gobo (e.g. between the gobo and the second optical system 20), so that the light diffuser is traversed by light radiation projected from the gobo plane towards the projection surface.

A method as exemplified herein may comprise selectively varying the distance (e.g. Z) between the gobo and the light diffuser coupled therewith.

A method as exemplified herein may comprise replacing one light diffuser with at least another light diffuser having different diffusive characteristics.

A lighting device (e.g. 10) as exemplified herein comprises:
- a light radiation source (e.g. 12),
- a first optical system (e.g. 14) configured to uniformly project light radiation from the light radiation source onto a gobo plane (e.g. GP),
- a gobo holder (e.g. 18), configured to hold a gobo (e.g. 16) at the gobo plane,
- a second optical system (e.g. 20) configured to project towards a projection surface (PP) light radiation projected onto the gobo plane, and
- a light diffuser (e.g. 22 - a single diffuser or a plurality of diffuser elements) configured to be coupled to a gobo held at the gobo plane by said gobo holder.

In a lighting device as exemplified herein, said light diffuser is arranged downstream of the gobo plane, so that the light diffuser is traversed by light radiation projected from the gobo plane towards the projection surface.

In a lighting device as exemplified herein, the light diffuser may be displaceable with respect to the device in order to:
- selectively vary (see e.g. ZREG, 24, 26) the distance between the gobo plane and the light diffuser, and/or in order to:
- replace one light diffuser with at least another light diffuser having different diffusive characteristics.

In a lighting device as exemplified herein, the light diffuser may comprise a glass or plastic material diffuser.

In a lighting device as exemplified herein, the gobo holder may be configured to allow gobo replacement (see e.g. double arrow GR in Figure 3).

In a lighting device as exemplified herein, the first optical system may include (e.g. in a cascade arrangement from source 12 towards gobo plane GP):
- a collimator optical assembly (e.g. 140, comprising one or more lenses),
- a mixing optics (e.g. 142), preferably a Fly's Eye lenslet array, and
- a condenser lens (e.g. 144).

In a lighting device as exemplified herein, the second optical system may comprise (e.g. in a cascade arrangement from gobo plane GP towards projection surface PP):
- an achromatic doublet for compensating chromatic aberration (e.g. achromatic doublet 200, 202), and
- a biconvex singlet lens (e.g. 204).

Without prejudice to the basic principles, the implementation details and the embodiments may vary, even appreciably, with respect to what has been described herein by way of non-limiting example only, without departing from the extent of protection.

The extent of protection is determined by the annexed claims.

**LIST OF REFERENCE SIGNS**

| | |
|---|---|
| Projection Surface | PP |
| Lighting Device | 10 |
| Light Radiation Source | 12 |
| First Optical System | 14 |
| Collimator optics | 140 |
| Mixing Optics | 142 |
| Condenser Lens | 144 |
| Gobo Plane | GP |
| Gobo | 16 |
| Gobo Holder | 18 |
| Second Optical System | 20 |
| Achromatic Doublet | 200, 202 |
| Biconvex Singlet Lens | 204 |
| Light Diffuser | 22 |
| Distance | Z |
| Distance Regulation | ZREG |
| Gobo Replacement | GR |

## Claims

1. A method of projecting light radiation onto a projection surface (PP), the method comprising:
- generating (12) light radiation and projecting (14) the light radiation generated onto a gobo (16) in a gobo plane (GP),
- projecting (20) towards the projection surface (PP) light radiation projected onto the gobo (16) in the gobo plane (GP),
wherein the method comprises coupling to the gobo (16) a light diffuser (22) to provide diffusion of light radiation at the gobo (16),
**characterized in that** the method comprises
arranging the light diffuser (22) downstream of the gobo (16), wherein the light diffuser (22) is traversed by light radiation projected from the gobo plane (GP) towards the projection surface (PP).

2. The method of claim 1, comprising selectively varying the distance (Z) between the gobo (16) and the light diffuser (22) coupled therewith.

3. The method of any of the previous claims, comprising replacing the light diffuser (22) with at least another light diffuser having different diffusive characteristics.

4. A lighting device (10), comprising:
- a light radiation source (12),
- a first optical system (14) configured to project light radiation from the light radiation source (12) onto a gobo plane (GP),
- a gobo holder (18) configured to hold a gobo (16) at the gobo plane (GP),
- a second optical system (20) configured to project towards a projection surface (PP) light radiation projected onto the gobo plane (GP), and
- a light diffuser (22) configured to be coupled to a gobo (16) held at the gobo plane (GP) by the gobo holder (18),
**characterized in that**
the light diffuser (22) is arranged downstream of the gobo plane (GP), wherein the light diffuser (22) is traversed by light radiation projected from the gobo plane (GP) towards the projection surface (PP).

5. The lighting device of claim 4, wherein the light diffuser (22) is displaceable with respect to the lighting device (10):
- to selectively vary (ZREG) the distance (Z) between the gobo plane (GP) and the light diffuser (22), and/or
- to replace the light diffuser (22) with at least another light diffuser (22) having different light diffusion characteristics.

6. The lighting device (10) of any of claims 4 or 5, wherein the light diffuser (22) comprises a glass or plastic material diffuser.

7. The lighting device (10) of any of claims 4 to 6, wherein the gobo holder (18) is configured to allow gobo (16) replacement.

8. The lighting device (10) of any of claims 4 to 7, wherein the first optical system (14) comprises:
- a collimator optical assembly (140),
- a mixing optics (142), and
- a condenser lens (144).

9. The lighting device (10) of claim 8, wherein the mixing optics (142) comprises a Fly's Eye lenslet array.

10. The lighting device (10) of any of claims 4 to 9, wherein the second optical system (20) comprises:
- an achromatic doublet (200, 202) for compensating chromatic aberration, and
- a singlet lens (204).

## Patentansprüche

1. Verfahren zum Projizieren von Lichtstrahlung auf eine Projektionsfläche (PP), das Verfahren umfassend:
- Erzeugen (12) von Lichtstrahlung und Projizieren (14) der erzeugten Lichtstrahlung auf einen Gobo (16) in einer Goboebene (GP),
- Projizieren (20) von Lichtstrahlung, die auf den Gobo (16) in der Goboebene (GP) projiziert wird, in Richtung der Projektionsfläche (PP),
wobei das Verfahren Koppeln eines Lichtdiffusors (22) mit dem Gobo (16) umfasst, um eine Diffusion von Lichtstrahlung an dem Gobo (16) bereitzustellen,
**dadurch gekennzeichnet, dass** das Verfahren umfasst
Anordnen des Lichtdiffusors (22) stromabwärts des Gobos (16), wobei der Lichtdiffusor (22) von Lichtstrahlung durchquert wird, die von der Goboebene (GP) in Richtung der Projektionsfläche (PP) projiziert wird.

2. Verfahren nach Anspruch 1, umfassend selektives Variieren des Abstands (Z) zwischen dem Gobo (16) und dem damit gekoppelten Lichtdiffusor (22).

3. Verfahren nach einem der vorhergehenden Ansprüche, umfassend Ersetzen des Lichtdiffusors (22) durch mindestens einen anderen Lichtdiffusor mit unterschiedlichen Diffusionseigenschaften.

4. Beleuchtungsvorrichtung (10), umfassend:
- eine Lichtstrahlungsquelle (12),
- ein erstes optisches System (14), das konfiguriert ist, um Lichtstrahlung von der Lichtstrahlungsquelle (12) auf eine Goboebene (GP) zu projizieren,
- einen Gobohalter (18), der konfiguriert ist, um einen Gobo (16) an der Goboebene (GP) zu halten,
- ein zweites optisches System (20), das konfiguriert ist, um Lichtstrahlung, die auf die Goboebene (GP) projiziert wird, in Richtung einer Projektionsfläche (PP) zu projizieren, und
- einen Lichtdiffusor (22), der konfiguriert ist, um durch den Gobohalter (18) mit einem Gobo (16) gekoppelt zu werden, der an der Goboebene (GP) gehalten wird, **dadurch gekennzeichnet, dass**
der Lichtdiffusor (22) stromabwärts der Goboebene (GP) angeordnet ist, wobei der Lichtdiffusor (22) von Lichtstrahlung durchquert wird, die von der Goboebene (GP) in Richtung der Projektionsfläche (PP) projiziert wird.

5. Beleuchtungsvorrichtung nach Anspruch 4, wobei der Lichtdiffusor (22) in Bezug auf die Beleuchtungsvorrichtung (10) verschiebbar ist:
- um den Abstand (Z) zwischen der Goboebene (GP) und dem Lichtdiffusor (22) selektiv zu variieren (ZREG), und/oder
- um den Lichtdiffusor (22) durch mindestens einen anderen Lichtdiffusor (22) mit unterschiedlichen Lichtdiffusionseigenschaften zu ersetzen.

6. Beleuchtungsvorrichtung (10) nach einem der Ansprüche 4 oder 5, wobei der Lichtdiffusor (22) einen Glas- oder Kunststoffdiffusor umfasst.

7. Beleuchtungsvorrichtung (10) nach einem der Ansprüche 4 bis 6, wobei der Gobohalter (18) konfiguriert ist, um einen Austausch des Gobos (16) zu ermöglichen.

8. Beleuchtungsvorrichtung (10) nach einem der Ansprüche 4 bis 7, wobei das erste optische System (14) umfasst:
- eine optische Kollimatoranordnung (140),
- eine Mischoptik (142), und
- eine Kondensorlinse (144).

9. Beleuchtungsvorrichtung (10) nach Anspruch 8, wobei die Mischoptik (142) eine Fly's Eye-Linsenanordnung umfasst.

10. Beleuchtungsvorrichtung (10) nach einem der Ansprüche 4 bis 9, wobei das zweite optische System (20) umfasst:
- eine achromatische Dublette (200, 202) zum Kompensieren chromatischer Aberration, und
- eine Singulettlinse (204).

## Revendications

1. Un procédé de projection d'un rayonnement lumineux sur une surface de projection (PP), le procédé comprenant :
- la génération (12) d'un rayonnement lumineux et la projection (14) du rayonnement lumineux généré sur un gobo (16) dans un plan de gobo (GP),
- la projection (20) en direction de la surface de projection (PP) du rayonnement lumineux projeté sur le gobo (16) dans le plan de gobo (GP),
dans lequel le procédé comprend le couplage au gobo (16) d'un diffuseur de lumière (22) pour produire une diffusion du rayonnement lumineux au niveau du gobo (16), **caractérisé en ce que** le procédé comprend
- l'agencement du diffuseur de lumière (22) en aval du gobo (16), le diffuseur de lumière (22) étant traversé par le rayonnement lumineux projeté depuis le plan de gobo (GP) vers la surface de projection (PP).

2. Le procédé de la revendication 1, comprenant une variation sélective de la distance (Z) entre le gobo (16) et le diffuseur de lumière (22) qui lui est couplé.

3. Le procédé de l'une des revendications précédentes, comprenant le remplacement du diffuseur de lumière (22) par au moins un autre diffuseur de lumière ayant des caractéristiques de diffusion différentes.

4. Un dispositif lumineux (10) comprenant :
- une source de rayonnement lumineux (12),
- un premier système optique (14) configuré pour projeter un rayonnement lumineux provenant de la source de rayonnement lumineux (12) sur un plan de gobo (GP),
- un support de gobo (18) configuré pour supporter un gobo (16) au niveau du plan de gobo (GP),
- un second système optique (20) configuré pour projeter en direction d'une surface de projection (PP) le rayonnement lumineux projeté sur le plan de gobo (GP), et
- un diffuseur de lumière (22) configuré pour être couplé à un gobo (16) supporté au niveau du plan de gobo (GP) par le support de gobo (18),
**caractérisé en ce que**
le diffuseur de lumière (22) est agencé en aval du plan de gobo (GP), le diffuseur de lumière (22) étant traversé par le rayonnement lumineux projeté depuis le plan de gobo (GP) en direction de la surface de projection (PP).

5. Le dispositif d'éclairage de la revendication 4, dans lequel le diffuseur de lumière (22) peut être déplacé par rapport au dispositif d'éclairage (10) :
- pour faire varier de façon sélective (ZREG) la distance (Z) entre le plan de gobo (GP) et le diffuseur de lumière (22), et/ou
- pour remplacer le diffuseur de lumière (22) par au moins un autre diffuseur de lumière (22) ayant des caractéristiques de diffusion de lumière différentes.

6. Le dispositif d'éclairage (10) de l'une des revendications 4 ou 5, dans lequel le diffuseur de lumière (22) comprend un diffuseur en verre ou en matière plastique.

7. Le dispositif d'éclairage (10) de l'une des revendications 4 à 6, dans lequel le support de gobo (18) est configuré pour permettre un remplacement du gobo (16).

8. Le dispositif d'éclairage (10) de l'une des revendications 4 à 7, dans lequel le premier système optique (14) comprend :
- un bloc optique de collimateur (140),
- une optique de mélange (142), et
- une lentille de condenseur (144).

9. Le dispositif d'éclairage (10) de la revendication 8, dans lequel l'optique de mélange (142) comprend un réseau lenticulaire "œil de mouche".

10. Le dispositif d'éclairage (10) de l'une des revendications 4 à 9, dans lequel le second système optique (20) comprend :
- un doublet achromatique (200, 202) pour compenser l'aberration chromatique, et
- une lentille simple (204).
